# EUROPEAN PATENT SPECIFICATION

(11) **EP 2 823 950 B1**
(45) Date of publication and mention of the grant of the patent: **30.03.2016**
(21) Application number: 14382235.1
(22) Date of filing: 17.06.2014
(51) Int. Cl.: B29C 65/00, B65B 51/30, B29C 65/18, B65B 57/00, B65B 61/10, B65B 9/02

(54) **Product wrapping machine and operating method for a product wrapping machine**
Produktumwickelungsmaschine und Betriebsverfahren für eine Produktumwickelungsmaschine
Machine d'emballage de produit et procédé de fonctionnement d'une machine d'emballage de produit

(30) Priority: 12.07.2013 ES 201331069
(43) Date of publication of application: 14.01.2015
(73) Proprietor: Ulma Packaging Technological Center, S.Coop., 20560 Guipuzcoa (ES)
(72) Inventor: Urcelay Ezquibel, Juan Jesús, 20560 Oñati (ES); Arrieta Aguirre, Haritz, 20560 Oñati (ES); Uriarte Lejarreta, Enekoitz, 20560 Oñati (ES)
(74) Representative: Igartua, Ismael

(56) References cited:
- EP-A1- 1 880 944
- EP-A2- 0 509 666
- WO-A1-03/051715
- GB-A- 1 281 964
- US-A- 3 453 801
- US-A- 3 928 941
- US-A- 4 870 802
- US-A- 5 191 750

## Description

### TECHNICAL FIELD

The present invention relates to product wrapping machines.

### PRIOR ART

Product wrapping machines are known. A machine of this type comprises a plurality of transverse counter-jaws and a plurality of respective transverse jaws, between which a film is sealed. In the document WO03051715A1 a machine is shown, where a product (in a container) is wrapped by a film and said film is sealed to two ends of the container, a counter-jaws / jaws arrangement being used for each of said ends. First counter-jaws / jaws seal an end cooperating with each other, situation in which they are closed, and they keep closed at the same time as they are moved in the forward direction together with the container, while the other counter-jaws / jaws keep open (without cooperating with each other) and static until the container is moved a certain distance (or are moved in the opposite direction), then closing to each other in order to seal the other end of the film over the container.

EP1880944A1 also discloses a machine for packaging articles with a film of plastic material, where a tubular casing is formed which envelops the articles. The machine comprises two transversal welding devices situated in succession along a longitudinal direction, and a respective motor group for activating each of the welding devices.

US5191750A discloses an apparatus for the forming, filling and closing of bags made from a heat-sealable film. The film is longitudinally welded to form a tube and is thereafter cross-welded by means of cross-sealing jaws. The cross-welding jaw is supported on a support which is connected to two parallel guide-bar arrangements.

In other type of machines, such as those which wrap certain products such as products without a container, the counter-jaws are homogeneously distributed in a forward direction of the products to be wrapped and are separated from each other by a certain and constant separation distance, and the machine comprises two parallel supports between every two counter-jaws on which a product to be wrapped is supported arranged.

This type of machines comprises transport means for causing the counter-jaws to move in the forward movement direction, the counter-jaws and the supports being attached to said transport means. Therefore, as the transport means are moved in the forward movement direction, the counter-jaws, the supports and the products arranged on the supports are also moved in the forward movement direction. The transport means are in continuous movement.

The machine further comprises a lower unwinder where a first reel of film is arranged, an upper unwinder where a second reel of film is arranged, and an actuator which is suitable for acting on the supports, causing the film from the first reel to be unwound and arranged on the counter-jaws and the supports, and causing the film from the second reel to be unwound and arranged on the product to be wrapped. The products are arranged on the corresponding supports once the film from the first reel has been arranged on said supports and before the products are covered by the film from the second reel. This operation can be done manually or automatically.

Each transverse jaw is suitable for being moved from an opening position to a closing position in a closing direction perpendicular to the forward movement direction for sealing the films to one another and cutting them. As in the machine disclosed in WO03051715A1, in the opening position the jaw is separated from the counter-jaw, whereas in the closing position the jaw acts against the counter-jaw. Since the transport means are in continuous movement and minimum time is needed for the jaw to act against the counter-jaw in order to correctly seal and cut the films, the jaw is moved in the forward movement direction following the counter-jaw to return to its initial position once sealing and cutting have been correctly performed. This movement is cyclically repeated. Some machines comprise two jaws that are distributed in the forward movement direction and separated from one another by the same separation distance between every two counter-jaws, such that the two jaws act simultaneously against two contiguous counter-jaws, machine productivity being increased by performing two operations simultaneously, both jaws being moved together.

Due to the sealing process performed by the jaws, the wrapping in which a product is wrapped often adheres to the counter-jaws, and this can involve the wrapping tearing when causing the separation or peeling off thereof, can prevent product transport and can cause the formation of creases or poor finishes in a subsequent shrink wrapping process, for example, which can entail having to dispose of the wrapped product at hand, increasing costs associated with film consumption and disposed product reprocessing.

### DISCLOSURE OF THE INVENTION

An object of the invention is to provide product wrapping machines as described below.

The product wrapping machine of the invention comprises a plurality of transverse counter-jaws that are homogenously distributed in a forward movement direction and are separated from one another by a specific separation distance suitable for housing a product, a lower unwinder for a first reel of film, an upper unwinder for a second reel of film, an actuator which is suitable for acting on the upper and lower supports, causing the film from the first reel to be unwound and arranged on the counter-jaws and the supports and the film from the second reel to be unwound and arranged on the products to be wrapped, and a plurality of transverse jaws that are homogenously distributed in the forward movement direction separated from one another by a separation distance equal to the separation distance existing between the counter-jaws. The jaws are suitable for moving in a closing direction perpendicular to the forward movement direction, from an opening position to a closing position, against the counter-jaws for sealing the films to one another and cutting them. Two films are thus sealed to one another and the films are cut in an intermediate area, thus separating two adjacent products.

The machine further comprises a positioning device which moves all the jaws integrally in the forward movement direction and a jaw actuator for each jaw which causes the corresponding jaw to move in the closing direction, such that the jaws are suitable for moving simultaneously in the forward movement direction and for moving independently from one another in the closing direction.

The machine further comprises a tensioner suitable for collecting part of the film wrapping the product when a jaw leaves the closing position. When a jaw acts against its corresponding counter-jaw, the jaw is responsible for sealing a second end of the wrapping of a previously wrapped product and a first end of the wrapping of a product that is being wrapped, cutting the films in an intermediate area of the sealing area for separating both products from one another.

The tensioner is suitable for causing the film wrapping the corresponding product to be collected when the jaw is separated from the corresponding counter-jaw, such that it is separated or disengaged from the counter-jaw in the second sealing area, said tensioner being associated with the upper unwinder and being suitable for acting on the film from the second reel arranged in said upper unwinder.

The machine further comprises control means for causing the jaws to move from its opening position to its closing position and vice versa in a sequential manner, said control means also causing a jaw to move to its closing position when the preceding jaw moving before it to its corresponding closing position has returned to its opening position and once the tensioner has collected part of the film wrapping the corresponding product.

As a result, the risk of the film adhering to the corresponding counter-jaw due to the sealing processes, which can result in the wrapping tearing when the wrapped product has to leave the machine, is reduced. All this provides advantages with respect to the known solution of the state of the art where jaws are moved simultaneously in the closing direction, such as, for example, the advantage of providing wrapped products with a smaller amount of film (which entails savings) and an improved outer appearance, and the film is separated from a counter-jaw, preventing it from adhering to same.

Another object of the invention is to provide an operating method for product wrapping machines.

The operating method of the invention is suitable for being implemented in a product wrapping machine such as the one mentioned above. The method comprises a sealing and cutting step in which the jaws are moved in the closing direction from an opening position to a closing position against the counter-jaws for sealing the films to one another and cutting them, and in which the jaws then return to their opening position once the sealing and cutting are performed, said sealing and cutting step being cyclically repeated.

The sealing and cutting step is performed independently for each jaw, the jaws being moved independently from one another to change from the opening position to the closing position and vice versa. The method further comprises a collecting step after each sealing and cutting step of a jaw and before the following sealing and cutting step of the following jaw starts, in which the film from the second reel wrapping the product is collected, said film being taut in the direction of said reel as a result of a tensioner..

The jaws implement the sealing and cutting steps in a sequential manner, the sealing and cutting step of a jaw beginning once the jaw being previously moved has finished its sealing and cutting step, and after the corresponding collecting step. One end of the wrapping is thus detached from its respective counter-jaw and savings in film are obtained by recovering part of the wrapping film of each product, as it has been commented for the machine of the invention.

These and other advantages and features of the invention will become evident in view of the drawings and the detailed description of the invention.

### DESCRIPTION OF THE DRAWINGS

Figure 1 shows a perspective view of an embodiment of the product wrapping machine of the invention, without showing at least the transport means and the supports.
Figures 2a - 2e show the perspective view of a detail of the machine of Figure 1, an operating sequence of the jaws of the machine of Figure 1 being depicted.
Figures 3a - 3j schematically show the action of the jaws of the machine of Figure 1 on products, an operating sequence of said jaws on said products being depicted.
Figure 4 schematically shows the action of the separating means on the counter-jaws and the products.

### DETAILED DISCLOSURE OF THE INVENTION

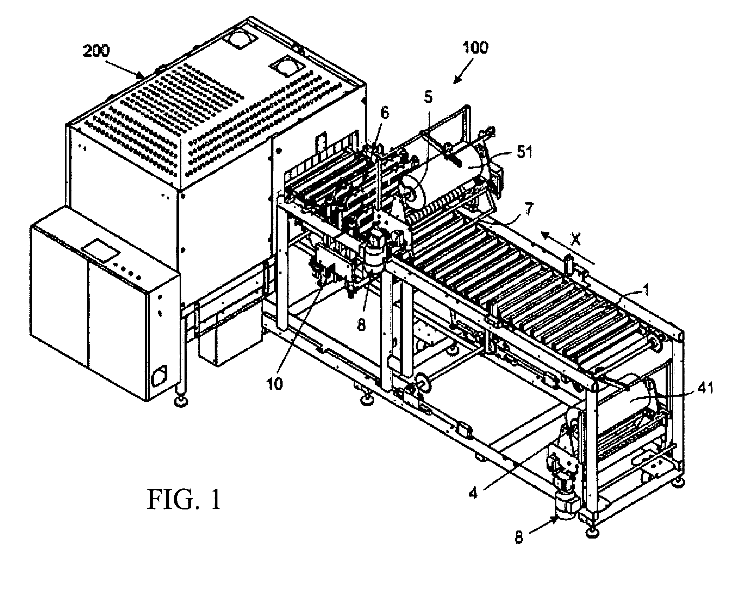

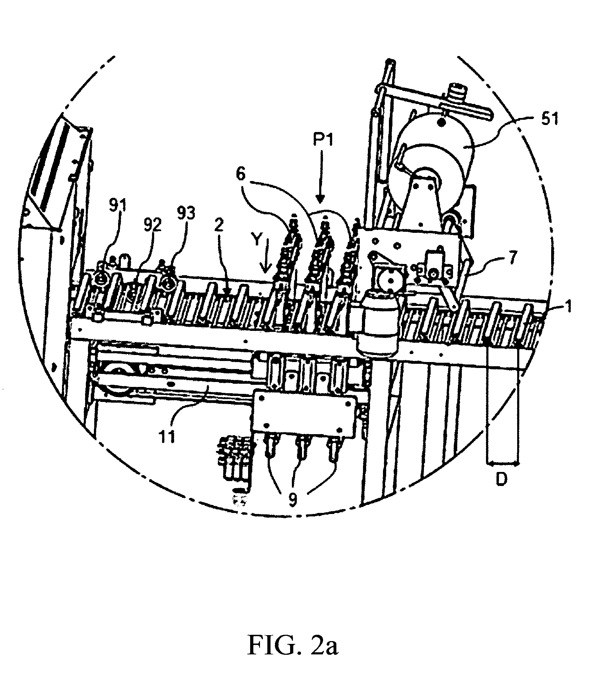

A first aspect of the invention relates to a product wrapping machine 100 such as that shown by way of example in Figure 1. The machine 100 comprises a plurality of transverse counter-jaws 1 that are homogenously distributed in a forward movement direction X of the products P to be wrapped and are separated from one another by a specific separation distance D suitable for housing a product P between every two counter-jaws 1, and at least one support 2 supporting a product P between every two counter-jaws 1. As shown in Figures 2a - 2e, the support 2 can be formed by two transverse rods arranged between every two counter-jaws 1, but it may also be a conveyor belt, a mesh or an equivalent device arranged under the counter-jaws 1, for example. As a result of the support 2, the product P is arranged between two counter-jaws 1 without coming out of that position during the forward movement thereof. Hereinafter, for the sake of clarity in view of the drawings, in the description the support 2 is formed by two transverse rods, although the support 2 may be different, as discussed above.

The machine 100 comprises transport means (not shown in the figures) for causing the counter-jaws 1 to move in the forward movement direction X, preferably at a substantially constant forward movement speed, the counter-jaws 1 and the supports 2 being attached at the ends thereof to said transport means. As the transport means are moved in the forward movement direction X, the counter-jaws 1, the supports 2 and the products P arranged on the supports 2 are also moved in the forward movement direction X. The transport means are a chain, belt or equivalent element on each side of the counter-jaws 1 (or supports 2) which causes the counter-jaws 1 (and supports 2) to move in a manner similar to a conveyor belt, so they comprise a plurality of guides guiding their movement. Hereinafter, when discussing the movement of the transport means, said movement must be interpreted as the movement of the area of the transport means where the products P to be wrapped and the already wrapped products P will move.

The machine 100 further comprises a lower unwinder 4 where a first reel 41 of film is arranged, an upper unwinder 5 where a second reel 51 of film is arranged, an actuator 8 for acting on each unwinder 4 and 5, causing the film from the first reel 41 to be unwound and arranged on the counter-jaws 1 and the supports 2, and the film from the second reel 51 to be unwound and arranged on the product P to be wrapped as said product P moves forward. The products P are arranged on the corresponding supports 2 once the film from the first reel 41 has been arranged on said supports and before the products are covered by the film from the second reel 51. This operation can be done manually or automatically. To facilitate the correct arrangement of the products P, the upper unwinder 5 is arranged in the position furthest ahead in the forward movement direction with respect to the lower unwinder 41, thus enabling a loading area for the products P.

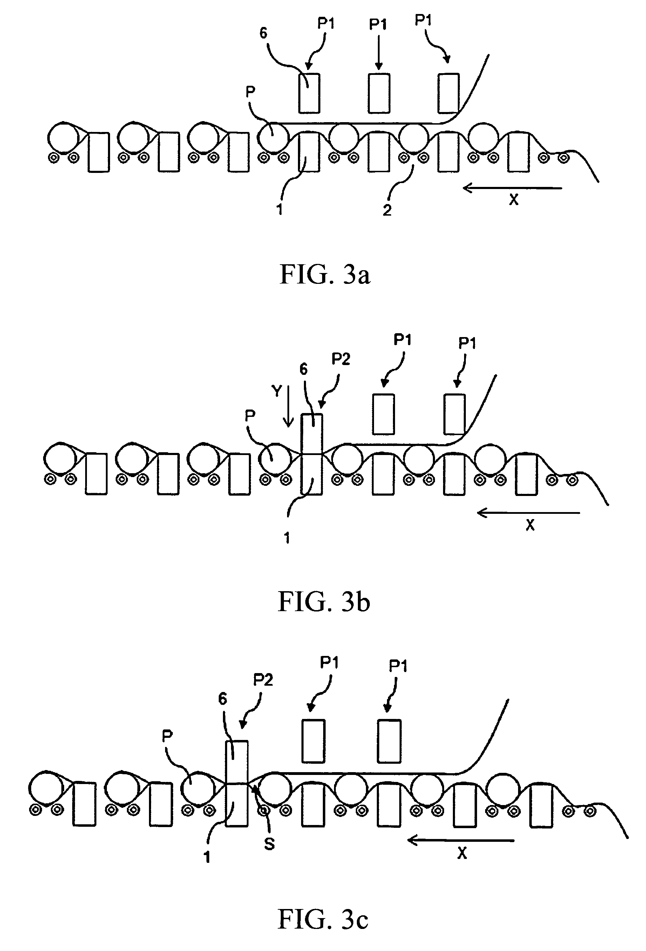

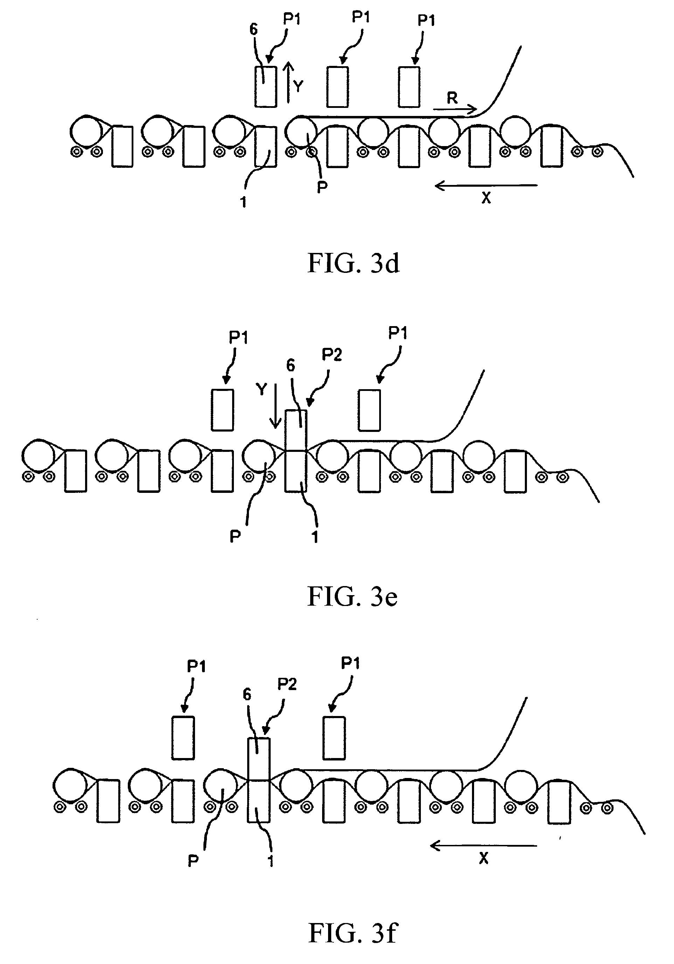

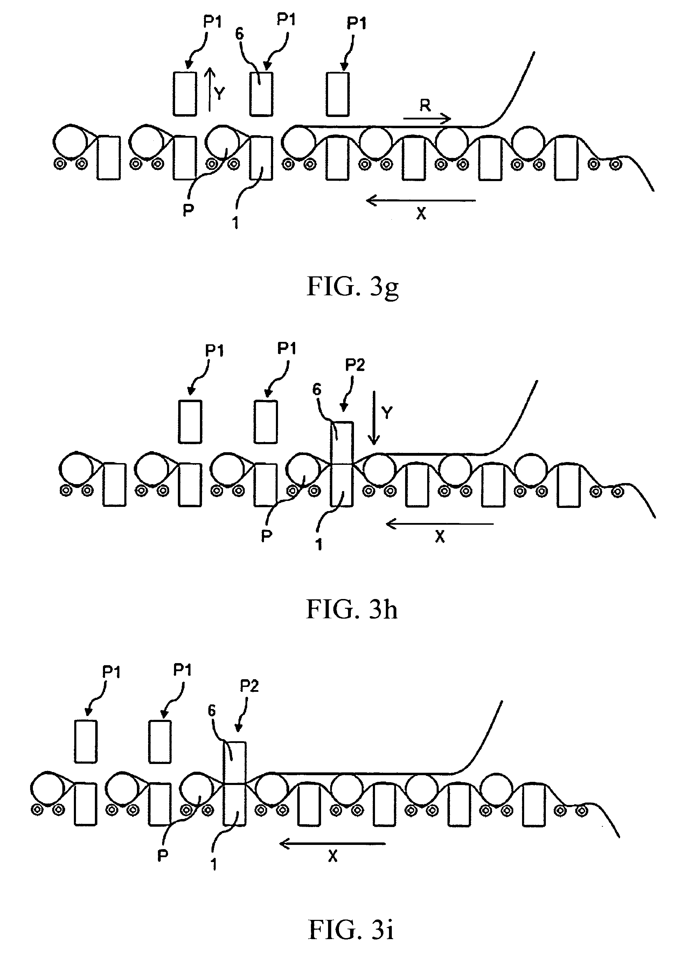

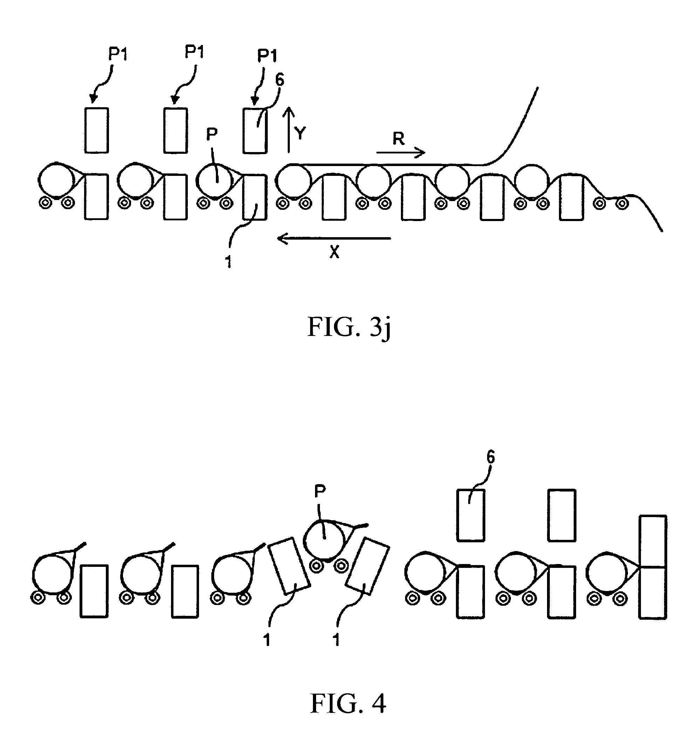

The machine 100 also comprises a plurality of transverse jaws 6, preferably at least three, that are homogenously distributed in the forward movement direction X with a separation distance D between them that is equal to the separation distance existing between the counter-jaws 1. The jaws 6 are joined to each other in such a way that they cannot be moved relative to each other in the forward movement direction X, but they are allowed to be moved relative to each other in a closing direction Y perpendicular to the forward movement direction X. The jaws 6 are suitable for sealing and cutting the films wrapping the products P by means of acting against the counter-jaws 1 (each jaw 6 acting against a counter-jaw 1). Therefore, the jaws 6 can be arranged in an opening position P1 where they do not act against the counter-jaws 1, and in a closing position P2 where they act against the counter-jaws 1. To change from the opening position P1 to the closing position P2 or vice versa, the jaws 6 are moved in the closing direction Y perpendicular to the forward movement direction X. The jaw 6 is suitable for sealing two films to one another and for cutting the sealed films in an intermediate area of the seal. As shown in the sequence of Figures 3a - 3j, in the closing position P2 a jaw 6 comprises one product P on each side, seals the upper and lower films to one another, closing one end of the wrapper of the product P which is the position lagging furthest behind in the forward movement direction X, and at the same time it also closes the wrapper of the product P which is the position furthest ahead in the forward movement direction X (the other end of said wrapping has already been previously closed in a sealing and cutting operation performed by the preceding jaw 6). After cutting is performed, two adjacent wrapped products P are separated from one another, thereby obtaining individually wrapped products P.

Since the counter-jaws 1 and the products P move continuously due to the action of the transport means and since minimum time is needed for a jaw 6 to act against its corresponding counter-jaw 1 for a correct sealing and cutting operation, the jaws 6 are moved in the forward movement direction X following the counter-jaws 1 and the products P to then return to their initial position once the corresponding sealing and cutting of said products P are performed. These steps are performed cyclically. The machine 100 comprises a positioning device 10 to provide movement of the jaws 6 in the forward movement direction X (and the return thereof).

Based on the foregoing it can be seen that when there is more than one jaw 6, a product P is wrapped by the action of two adjacent jaws 6: one jaw 6 forms the seal or closure of one side of the wrapper wrapping the product P, i.e., first closure, whereas the other jaw 6 forms the seal or closure of the other side of the wrapper wrapping said product P, i.e, second closure. For example, the jaw 6 furthest ahead in the forward movement direction X forms the first closure, sealing the films to one another and cutting them on one side of the product P, and the contiguous jaw 6 forms the second closure, sealing the films to one another and cutting them on the other side of the product P. On the other hand, each jaw 6 intervenes in the wrapper of two contiguous products P: when one jaw 6 forms the first closure for the wrapper of a product P, the same action causes the second closure for the wrapper of a preceding product to be formed. In other words, the action of one jaw forming the second closure in the wrapper of a product P entails forming the first closure in the wrapper of the product P that is going to be wrapped next in addition to cutting the films, causing said products P to separate from one another.

The machine 100 further comprises a jaw actuator 9 for each jaw 6 causing the corresponding jaw 6 to move in the closing direction Y. Therefore, with the machine 100 of the invention the jaws 6 are suitable for moving together in the forward movement direction X as a result of the positioning device 10, to which they are attached, and for moving independently from one another in the closing direction Y as a result of the different jaw actuators 9. The positioning device 10 is a structure to which the jaws 6 are attached with freedom of movement relative to each other in the closing direction Y, but impeded to be moved independently to each other in the forward movement direction X.

The machine 100 further comprises a tensioner 7 suitable for collecting part of the film wrapping the product P when a jaw 6 leaves the closing position P2. When this occurs, the film is no longer locked between the jaws 6 and the counter-jaws 1, and as a result of the action of the tensioner 7, which always tries to keep the corresponding film slightly taut, the film arranged on the corresponding sealing area is collected and separated from said sealing area, preventing it from adhering to the corresponding counter-jaw 1.

The tensioner 7 is associated with the upper unwinder 5 and is suitable for acting on the film from the second reel 51 which is arranged in said upper unwinder 5, such that when said film is collected, it does so by returning the film to the second reel 51. When no jaw 6 is in the closing position P2, the films wrapping the last product P on which the jaw 6 has acted are only sealed at the end furthest ahead in the forward movement direction X. Said end has been closed as a result of the seal joining the films of the reels 41 and 51, whereas the other end reaches reel 51 (over the product P) on one hand and reel 41 (under the product P) on the other hand. The tensioner 7 collects the film partially wrapping said product by the end reaching the reel 51.

In addition to the mentioned advantage relating to the separation of the already sealed film from the counter-jaws 1, the machine 100 of the invention uses a smaller amount of film when wrapping a product P, which entails a considerable production cost reduction. This does not occur in the state of the art, not even by using a tensioner such as that of the machine 100 of the invention since if there is a plurality of jaws acting simultaneously against corresponding counter-jaws, the films are cut without there being any chance to collect part of the film, there being no possibility of film savings in all the wrapped products unlike what occurs in the machine of the invention. Since the jaws 6 can be actuated independently from one another as a result of the jaw actuators 9, the machine 100 of the invention enables the jaws 6 to act on corresponding counter-jaws 1 one at a time, such that every time a jaw 6 stops acting against its corresponding counter-jaw 1, film collection can carried out before causing the following jaw 6 to act against its corresponding counter-jaw 1. Therefore, the advantage of film savings is obtained while at the same time productivity increases as a result of using a plurality of jaws 6. The film savings can exceed 30% compared to the wrapping film used for the same product P in a machine of the state of the art.

The machine 100 further comprises control means, not depicted in the drawings, which are responsible for controlling the movement of the jaws 6. The control means are responsible for causing the action of the positioning device 10 (in particular the displacement of the positioning device 10 in the forward movement direction X, and consequently the jaws 6 to be moved in the forward movement direction X) and the jaw actuators 9 to be actuated and they further cause the jaws 6 to move sequentially against the corresponding counter-jaws 1 in the closing direction Y to obtain the aforementioned advantages. The control means comprise a controller, processor or another device capable of performing that task.

When the films are sealed, if they are heat-sealed they may adhere to the counter-jaw 1 on which sealing is performed, and as mentioned before, as a result of the jaws 6 being able to move individually in a sequential manner, and as a result of the tensioner 7, one end of the wrapping of the product P is separated from the counter-jaws 1 (one end of the wrapping of the product P which is arranged lagging further behind the corresponding counter-jaw 6 in the forward movement direction X) and wrapping film consumption is reduced.

To separate or peel off the other end of the wrapping, the machine 100 comprises separating means acting on the film wrapping a product P once the product P is already wrapped. The separating means cause the distance between a wrapped product P and the counter-jaws 1 between which it is arranged to increase. In the embodiment shown in the drawings, the separating means do this by causing the transport means to become misaligned at a point where the products P are already individually wrapped, i.e., at a point after where the jaws 6 act against the counter-jaws 1, where the films forming the wrapping are still hot and can more readily peel off (the adhesion problem intensifies once said films have cooled, which makes peeling them off the counter-jaws 1 without damaging the wrapping difficult or impossible). In another embodiment, this could be done by means of an upward thrust on the product P which would separate it from the support 2 and therefore the counter-jaws 1, by means of an actuator specific for such purpose (the actuation thereof would be controlled with control means). Therefore, the part of the wrapping of the product P which may be on at least one of the counter-jaws 1 would be separated.

In the embodiment of the machine 100 shown in the drawings, the separating means comprise at least three rollers 91, 92 and 93 distributed in the forward movement direction X, and the machine 100 comprises two parallel separating means between which the counter-jaws 1 are located. The first roller 91 and the last roller 93 are aligned with one another. The intermediate roller 92 is responsible for misaligning the transport means and is arranged such that it is misaligned with respect to the other two rollers 91 and 93. In said embodiment, the intermediate roller 92 is arranged at a height less than the height at which the other two rollers 91 and 93 are arranged, and the transport means pass under the first roller 91 and the last roller 93 and over the intermediate roller 92.

The intermediate roller 92 is sized such that two contiguous counter-jaws 1 are inclined in opposite directions when they are located on said intermediate roller 92, following a curved path with respect to an axis of rotation of the intermediate roller 92, whereas the product P arranged between said counter-jaws 1 is kept centered on the support 2. In that situation, since the product P is kept in place, the end of the wrapping of the product P that may be adhered to a counter-jaw 1 is separated from or peeled off said counter-jaw 1, because the distance between a product P and the counter-jaws 1 between which it is arranged increases, and therefore the part of the wrapping of the product P that may be on a counter-jaw 1 is detached from it. The effect of the separating means is schematically depicted in Figure 4, where it is seen that the distance between the product P referenced in said Figure 4 and the two counter-jaws 1 (also referenced in said Figure 4) between which it is arranged increases.

The machine 100 further comprises a shrink wrapping oven 200 where the already wrapped products P are introduced after passing through the separating means so that the film wrapping the products is shrink-wrapped and fitted thereon. The oven 200 may not be part of the machine 100.

A second aspect of the invention relates to an operating method that can be implemented in a machine 100 such as that discussed in the first aspect of the invention.

The operating method of the invention comprises a sealing and cutting step in which the jaws 6 are moved in the closing direction Y from their opening position P1 to their closing position P2 against the counter-jaws 1 for sealing the films to one another and cutting them, and in which the jaws 6 then return to their opening position P1 once sealing and cutting are performed, said sealing and cutting step being cyclically repeated.

In the method of the invention, the sealing and cutting step is performed independently for each jaw 6, the jaws 6 being moved independently from one another to change from the opening position P1 to the closing position P2 and vice versa. The method further comprises a collecting step after each sealing and cutting step of a jaw 6 and before the following sealing and cutting step of the following jaw 6 starts, in which part of the film wrapping a product P the wrapping of which has been sealed at one end by the jaw 6 that has previously performed a sealing and cutting step is collected. The advantages discussed above when explaining the first aspect of the invention can thus be obtained.

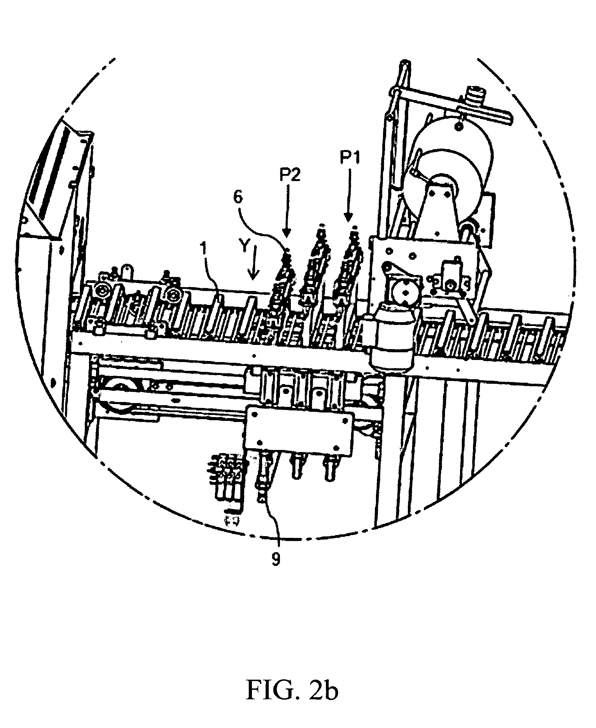

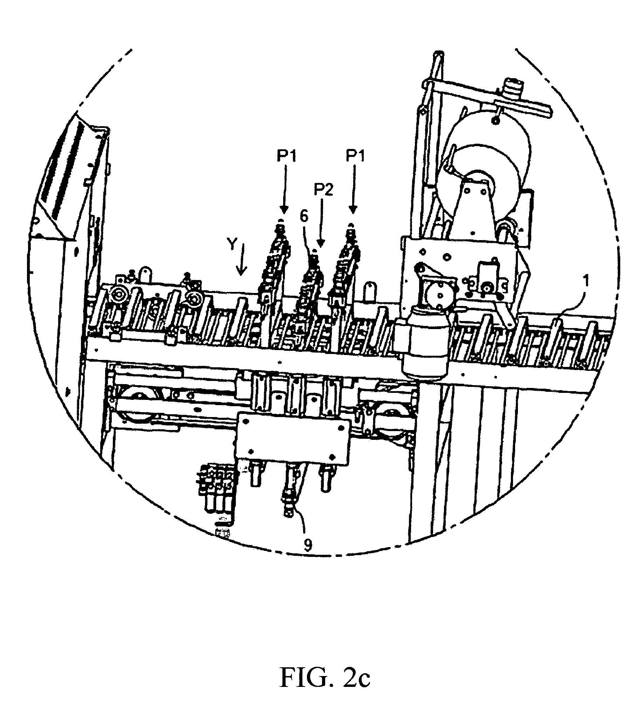

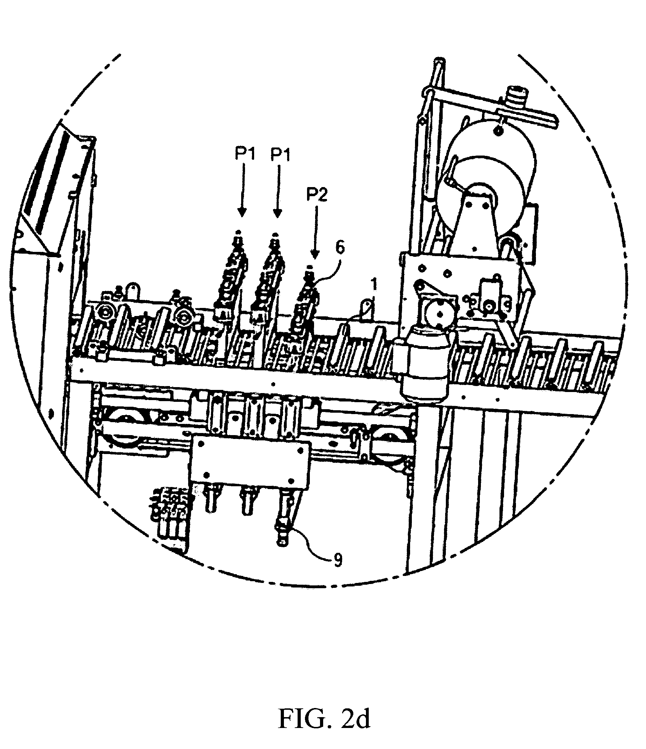

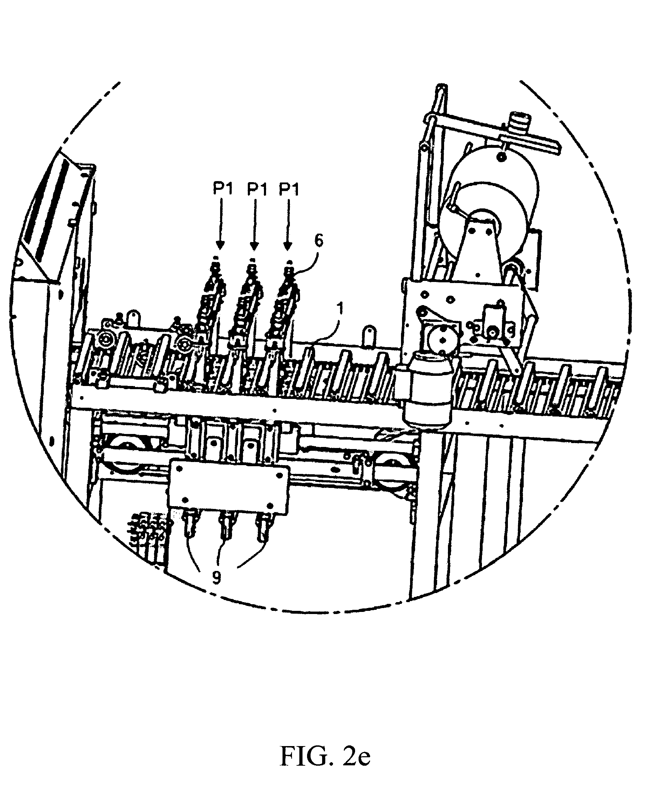

In the method of the invention, the jaws 6 are moved from the opening position P1 to the closing position P2 in a sequential manner, as shown in Figures 2a - 2e, starting with jaw 6 which is furthest ahead in the forward movement direction X, for example. In Figure 2a, all the jaws are in the opening position P1; in Figure 2b the first jaw 6 is in the closing position P2 and the rest in the opening position P1. In Figure 2c the second jaw 6 is in the closing position P2 and the rest in the opening position P1. In Figure 2d the third jaw 6 is in the closing position P2 and the rest in the opening position P1. In Figure 2e all the jaws are in the opening position P1 right before returning to their initial position (Figure 2a). As shown in said drawings, where a guide rail 11 for moving in the forward movement direction X of the positioning device 10, and consequently of the jaws 6, is further depicted, said jaws 6 have been moved forward in the forward movement direction X as the operations for sealing and cutting the respective products P were performed, and once the process ended, the positioning device 10 moves back in the forward movement direction X causing the jaws 6 to move backwards to their initial position, and the cycle is repeated with new products P to be wrapped.

Therefore, before one jaw 6 acts against its corresponding counter-jaw 1, since no other jaw 6 is acting against a counter-jaw 1, the film can be slightly taut in the direction of the reel 51 as a result of the tensioner 7 of the machine 100, part of said film being collected, such that one end of the wrapping of the product P is separated from its corresponding counter-jaw 1 and the amount of film existing between said jaw 6 and the preceding jaw 6 is reduced, which means there is less film for wrapping the product P arranged between the counter-jaw 1 corresponding to said jaw 6 and the counter-jaw 1 corresponding to the preceding jaw 6. Furthermore, possible creases in the film that would negatively affect the outer appearance of a wrapped product P are reduced or eliminated since the film is slightly taut.

The movement sequence of the jaws 6 is continuous, one jaw 6 performing the sealing and cutting step when its adjacent jaw 6 in the forward movement direction X has concluded the sealing and cutting step and after the corresponding collecting step, except when the sealing and cutting step of the jaw 6 arranged in the position lagging furthest behind in the forward movement direction X is performed, in which case, after the corresponding collecting step, the following sealing and cutting step is performed by the jaw 6 arranged in the position furthest ahead in the forward movement direction X, once it has returned to its initial position.

The process is explained below in reference to Figures 3a - 3j, depicting same for the embodiment of the mentioned machine 100 comprising three jaws 6. If a machine 100 had more jaws 6, the process would be equivalent.

Figure 3a shows all the jaws 6 in the opening position P1 and in their position lagging furthest behind in the forward movement direction X which corresponds with the initial position.

Figure 3b shows the actuation of the first jaw 6 with respect to its corresponding counter-jaw 1 in its closing position P2, whereas the other jaws 6 remain in the opening position P1. The jaw 6 seals one end of the product P referenced in Figure 3b (the other end had already been previously sealed) and another end of the product P arranged to the right.

Figure 3c shows the same situation as Figure 3b but it can be seen that the jaws 6 followed the counter-jaws 1 in the forward movement direction X since sealing requires a minimum time of actuation between the jaw 6 and its corresponding counter-jaw 1.

Figure 3d shows that the first jaw 6 has returned to an opening position P1 while the other jaws 6 remain in the opening position P1. Figure 3d shows how the referenced product P has been separated from the following product P (product P to the right of the first jaw 6), and the film wrapping said following product P has been collected in direction R, such that said film is no longer in contact with the counter-jaw 1 corresponding to the first jaw 6 and the space S shown in Figure 3c has been eliminated, entailing a reduced amount of film used for wrapping said following product P and reducing or eliminating the risk of creases occurring in said wrapper.

Figures 3e - 3g show the same development but in reference to the second jaw 6, and Figures 3h - 3j show the same development but in reference to the third jaw 6. After the sealing and cutting step of the third jaw 6 ends, the jaws 6 would return to their initial position in the forward movement direction X.

The method further comprises a separating step which causes the distance between a wrapped product P and the counter-jaws 1 between which it is arranged to increase, such that the part of the wrapping of the product P arranged on a counter-jaw 1 is detached from said counter-jaw 1. In one embodiment of the method, the distance between a wrapped product P and the counter-jaws 1 between which it is arranged is increased by separating the counter-jaws 1 from one another, and said separation is done by causing the counter-jaws 1 to rotate in opposite directions. This process and the advantages it entails have been discussed above in the explanation referring to the first aspect of the invention, in relation to the separating means, which are responsible for performing the separating step.

In another embodiment of the method, the distance between a wrapped product P and the counter-jaws 1 between which it is arranged is increased by causing an upward thrust on the product P, the product P thus being separated. The product P thus moves away from the counter-jaws 1, and the part of the wrapper that may adhere to one of the counter-jaws 1 is detached from same.

## Claims

1. Product wrapping machine comprising transport means causing the products (P) to move in a forward movement direction (X), a plurality of transverse counter-jaws (1) that are homogenously distributed in the forward movement direction (X) and separated from one another by a specific separation distance (D) suitable for housing a product (P), a lower unwinder (4) for a first reel (41) of film, causing the film from the first reel (41) to be arranged on the counter-jaws (1), an upper unwinder (5) for a second reel (51) of film, causing the film from the second reel (51) to be arranged on the products (P) to be wrapped, a plurality of transverse jaws (6) that are homogenously distributed in the forward movement direction (X) separated from one another by the same separation distance (D) existing between the counter-jaws (1), the jaws (6) moving in a closing direction (Y) perpendicular to the forward movement direction (X) from an opening position (P1) to a closing position (P2) against the counter-jaws (1) for sealing together the films to one another and cutting them, and each jaw (6) being suitable for forming at least one seal between two films and for cutting the sealed films in an intermediate area of the seal, and a positioning device (10) moving all the jaws (6) integrally in the forward movement direction (X), **characterized in that** the machine (100) further comprises a jaw actuator (9) for each jaw (6) causing the corresponding jaw (6) to move in the closing direction (Y), such that the jaws (6) are suitable for moving simultaneously in the forward movement direction (X) and for moving independently from one another in the closing direction (Y); a tensioner (7) or rocker arm suitable for collecting part of the film wrapping the product (P) when a jaw (6) leaves the closing position (P2), the tensioner (7) being associated with the upper unwinder (5) and being suitable for acting on the film from the second reel (51) arranged in said upper unwinder (5); and control means for causing the jaws (6) to move from an opening position (P1) to a closing position (P2) and vice versa in a sequential manner, further said control means causing a jaw (6) to move to its closing position (P2) when the preceding jaw (6) moving before it to its corresponding closing position (P2) has returned to its opening position (P1) and once the tensioner (7) has collected part of the film wrapping the corresponding product (P).

2. Product wrapping machine according to claim 1, wherein the jaws (6) are attached to the positioning device (10) with freedom of movement in the closing direction (Y), said jaws (Y) being moved together with said positioning device (10) in the forward movement direction (X).

3. Product wrapping machine according to claims 1 or 2, wherein the jaw actuators (9) are attached to the positioning device (10), said jaw actuators (9) being moved together with said positioning device (10) in the forward movement direction (X).

4. Product wrapping machine according to any of claims 1 to 3, comprising separating means for peeling the film off the counter-jaws (1) once the jaw (6) has stopped acting against said counter-jaw (1), causing the distance between the wrapped product (P) and the counter-jaws (1) between which it is arranged to increase.

5. Product wrapping machine according to claim 4, wherein to increase the distance between the wrapped product (P) and the counter-jaws (1) between which it is arranged, the separating means cause the transport means to become misaligned at a point where the products are already wrapped.

6. Product wrapping machine according to claim 5, wherein the separating means comprise at least three rollers (91, 92, 93) distributed in the forward movement direction (X), the first roller (91) and the last roller being (93) aligned with one another and keeping the transport means aligned, and the intermediate roller (92) being arranged such that it is misaligned with respect to the other two rollers (91,92).

7. Product wrapping machine according to claim 6, wherein the intermediate roller (92) is arranged at a height less than the height at which the other two rollers (91, 93) are arranged, the transport means passing under the first roller (91) and the last roller (93) and over the intermediate roller (92), the intermediate roller (92) causing the transport means to become misaligned as said means pass over it.

8. Product wrapping machine according to claim 7, wherein the intermediate roller (92) is sized such that two contiguous counter-jaws (1) are inclined in opposite directions when they are located on said intermediate roller (92), following a curved path with respect to an axis of rotation of the intermediate roller (92) when the product arranged between both counter-jaws (1) is arranged such that it is centered on the intermediate roller (92).

9. Product wrapping machine according to claim 4, comprising an actuator acting on the product (P) to separate it from the counter-jaws (1).

10. Operating method for a product wrapping machine comprising a lower unwinder (4) for a first reel (41) of film, causing the film from the first reel (41) to be arranged on the counter-jaws (1), an upper unwinder (5) for a second reel (51) of film, causing the film from the second reel (51) to be arranged on the products (P) to be wrapped, a plurality of transverse counter-jaws (1) that are homogenously distributed in a forward movement direction (X) and are separated from one another by a specific separation distance (D), and a plurality of transverse jaws (6) that are homogenously distributed in the forward movement direction (X), the method comprising a sealing and cutting step in which the jaws (6) are moved in a closing direction (Y) perpendicular to the forward movement direction (X) from an opening position (P1) to a closing position (P2) against the counter-jaws (1) for sealing the films to one another and cutting them and said jaws (6) then return to their opening position (P1) once sealing and cutting are performed, the jaws (6) being moved in the forward movement direction (X) following the products (P) during their sealing and cutting step and returning to their initial position in the forward movement direction (X) once their sealing and cutting step has ended, said sealing and cutting step and said movement in direction (X) being cyclically repeated, **characterized in that** the sealing and cutting step is performed independently for each jaw (6), the jaws (6) moving independently from one another at least to change from the opening position (P1) to the closing position (P2) and vice versa, and **in that** it comprises a collection step after each sealing and cutting step of a jaw (6) and before the following sealing and cutting step of the following jaw (6) starts, in which the film from the second reel (51) wrapping the product (P) is collected, said film being taut in the direction of said reel (51) as a result of a tensioner (7), the jaws (6) performing the sealing and cutting steps sequentially, the sealing and cutting step of one jaw (6) starting once the jaw (6) that has previously moved has concluded its sealing and cutting step, and after the subsequent collecting step.

11. Method according to claim 10, wherein the sequence of the jaws (6) is continuous, the sealing and cutting step of one jaw (6) being performed when a jaw (6) adjacent to it in the forward movement direction (X) has concluded the sealing and cutting step and after the corresponding collecting step, except when the sealing and cutting step of the jaw (6) arranged in the position that is furthest behind in the forward movement direction (X) is performed, in which case after the corresponding collecting step, the following sealing and cutting step corresponds to the jaw (6) arranged in the position furthest ahead in the forward movement direction (X).

12. Method according to claims 10 or 11, comprising a separating step in which an increase is caused in the distance between a wrapped product (P) and the counter-jaws (1) between which it is arranged, such that the part of the wrapping of the product (P) arranged on a counter-jaw (1) is detached from said counter-jaw (1).

13. Method according to claim 12, wherein the distance between a wrapped product (P) and the counter-jaws (1) between which it is arranged is increased by separating said counter-jaws (1) from one another, and said separation is done by causing both counter-jaws (1) to rotate in opposite directions.

14. Method according to claim 13, wherein the distance between a wrapped product (P) and the counter-jaws (1) between which it is arranged is increased by causing an upward thrust on the product (P), the product (P) being separated.

## Patentansprüche

1. Produktverpackungsmaschine, umfassend ein Transportmittel, das verursacht, dass sich die Produkte (P) in einer Vorwärtsbewegungsrichtung (X) bewegen, eine Vielzahl von quer liegenden Gegenbacken (1), die homogen in der Vorwärtsbewegungsrichtung (X) verteilt sind und voneinander durch einen spezifischen Trennabstand (D) getrennt sind, der geeignet ist, um ein Produkt (P) aufzunehmen, einen unteren Abwickler (4) für eine erste Walze (41) von Folie, der verursacht, dass die Folie von der ersten Walze (41) auf den Gegenbacken (1) angeordnet wird, einen oberen Abwickler (5) für eine zweite Walze (51) von Folie, der verursacht, dass die Folie von der zweiten Walze (51) auf den Produkten (P) angeordnet wird, die verpackt werden sollen, eine Vielzahl von quer liegenden Backen (6), die homogen in der Vorwärtsbewegungsrichtung (X) verteilt sind, getrennt voneinander durch den gleichen Trennabstand (D), der zwischen den Gegenbacken (1) vorhanden ist, wobei sich die Backen (6) in einer Schließrichtung (Y) senkrecht zur Vorwärtsbewegungsrichtung (X) von einer Öffnungsposition (P1) in eine Schließposition (P2) gegen die Gegenbacken (1) bewegen, um miteinander die Folien aneinander zu versiegeln und sie zu schneiden, und wobei jede Backe (6) geeignet ist, um mindestens eine Versiegelung zwischen zwei Folien zu bilden und um die versiegelten Folien in einem Zwischenbereich der Versiegelung zu schneiden, und wobei eine Positionierungsvorrichtung (10) alle Backen (6) vollständig in der Vorwärtsbewegungsrichtung (X) bewegt, **dadurch gekennzeichnet, dass** die Maschine (100) weiter eine Backen-Betätigungsvorrichtung (9) für jede Backe (6) umfasst, die verursacht, dass sich die entsprechende Backe (6) in die Schließrichtung (Y) bewegt, so dass die Backen (6) geeignet sind, um sich gleichzeitig in die Vorwärtsbewegungrichtung (X) zu bewegen und um sich unabhängig voneinander in die Schließrichtung (Y) zu bewegen; ein Spannelement (7) oder einen Kipphebel, um einen Teil der Folien, die das Produkt (P) verpackt, zu sammeln, wenn eine Backe (6) die Schließposition (P2) verlässt, wobei das Spannelement (7) mit dem oberen Abwickler (5) assoziiert ist und geeignet ist, um auf die Folie von der zweiten Walze (51), die auf dem oberen Abwickler (5) angeordnet ist, zu wirken; und Steuermittel, um zu verursachen, dass sich die Backen (6) von einer Öffnungsposition (P1) in eine Schließposition (P2) und umgekehrt auf eine sequenzielle Weise bewegen, wobei weiter diese Steuermittel verursachen, dass sich eine Backe (6) in ihre Schließposition (P2) bewegt, wenn die vorhergehende Backe (6), die sich vor dieser in ihre entsprechende Schließposition (P2) bewegt, in ihre Öffnungsposition (P1) zurückgeführt ist, und nachdem das Spannelement (7) einen Teil der Folie, die das entsprechende Produkt (P) verpackt, gesammelt hat.

2. Produktverpackungsmaschine nach Anspruch 1, wobei die Backen (6) an die Positionierungsvorrichtung (10) mit Bewegungsfreiheit in der Schließrichtung (Y) angebracht sind, wobei die Backen (Y) zusammen mit der Positionierungsvorrichtung (10) in der Vorwärtsbewegungsrichtung (X) bewegt werden.

3. Produktverpackungsmaschine nach Anspruch 1 oder 2, wobei die Backen-Betätigungsvorrichtungen (9) an die Positionierungsvorrichtung (10) befestigt sind, wobei die Backen-Betätigungsvorrichtungen (Y) zusammen mit der Positioniervorrichtung (10) in der Vorwärtsbewegungsrichtung (X) bewegt werden.

4. Produktverpackungsmaschine nach einem der Ansprüche 1 bis 3, umfassend Trennmittel zum Abziehen der Folie von den Gegenbacken (1), nachdem die Backe (6) aufgehört hat, gegen die Gegenbacke (1) zu wirken, wodurch verursacht wird, dass der Abstand zwischen dem verpackten Produkt (P) und den Gegenbacken (1), zwischen denen es angeordnet ist, erhöht wird.

5. Produktverpackungsmaschine nach Anspruch 4, wobei, um den Abstand zwischen dem verpackten Produkt (P) und den Gegenbacken (1), zwischen denen es angeordnet ist, zu erhöhen, die Trennmittel verursachen, dass das Transportmittel an einem Punkt versetzt wird, an dem die Produkte bereits verpackt sind.

6. Produktverpackungsmaschine nach Anspruch 5, wobei die Trennmittel mindestens drei Rollen (91, 92, 93) umfassen, die in der Vorwärtsbewegungsrichtung (X) verteilt sind, wobei die erste Rolle (91) und die letzte Rolle (93) miteinander ausgefluchtet werden und das Transportmittel ausgefluchtet halten, und wobei die mittlere Rolle (92) derart angeordnet ist, dass sie mit Bezug auf die anderen zwei Rollen (91, 92) versetzt ist.

7. Produktverpackungsmaschine nach Anspruch 6, wobei die mittlere Rolle (92) in einer Höhe angeordnet ist, die geringer als die Höhe ist, in der die beiden anderen Rollen (91, 93) angeordnet sind, wobei das Transportmittel unter der ersten Rolle (91) und der letzten Rolle (93) und über der mittleren Rolle (92) verläuft, wobei die mittlere (92) Rolle verursacht, dass das Transportmittel versetzt wird, wenn das Mittel über es verläuft.

8. Produktverpackungsmaschine nach Anspruch 7, wobei die mittlere Rolle (92) derart abgemessen ist, dass zwei benachbarte Gegenbacken (1) in entgegengesetzte Richtungen geneigt sind, wenn sie sich auf der mittleren Rolle (92) befinden, einem gekrümmten Weg mit Bezug auf eine Drehachse der mittleren Rolle (92) folgen, wenn das Produkt, das zwischen beiden Gegenbacken (1) angeordnet ist, derart angeordnet ist, dass es auf der mittleren Rolle (92) zentriert ist.

9. Produktverpackungsmaschine nach Anspruch 4, wobei eine Betätigungsvorrichtung (P) auf das Produkt wirkt, um es von den Gegenbacken (1) zu trennen.

10. Betriebsverfahren für eine Produktverpackungsmaschine, umfassend einen unteren Abwickler (4) für eine erste Walze (41) von Folie, der verursacht, dass die Folie von der ersten Walze (41) auf den Gegenbacken (1) angeordnet wird, einen oberen Abwickler (5) für eine zweite Walze (51) von Folie, der verursacht, dass die Folie von der zweiten Walze (51) auf den Produkten (P) angeordnet wird, die verpackt werden sollen, eine Vielzahl von quer liegenden Gegenbacken (1), die homogen in der Vorwärtsbewegungsrichtung (X) verteilt sind, und voneinander durch einen spezifischen Trennabstand (D) getrennt sind, und eine Vielzahl von quer liegenden Backen (6) die homogen in der Vorwärtsbewegungsrichtung (X) verteilt sind, wobei das Verfahren einen Schritt des Versiegelns und Schneidens umfasst, in dem die Backen (6) in einer Schließrichtung (Y) senkrecht zur Vorwärtsbewegungsrichtung (X) von einer Öffnungsposition (P1) in eine Schließposition (P2) gegen die Gegenbacken (1) bewegt werden, um die Folien aneinander zu versiegeln und sie zu schneiden, und die Backen (6) dann in ihre Öffnungsposition (P1) zurückkehren, nachdem das Versiegeln und Schneiden durchgeführt wurde, wobei die Backen (6) in die Vorwärtsbewegungsrichtung (X) bewegt werden und den Produkten (P) während ihres Schritts des Versiegelns und des Schneidens folgen und in ihre Ausgangsposition in der Vorwärtsbewegungsrichtung (X) zurückkehren, nachdem ihr Schritt des Versiegelns und des Schneidens beendet ist, wobei der Schritt des Versiegelns und des Schneidens und die Bewegung in die Richtung (X) zyklisch wiederholt wird, **dadurch gekennzeichnet, dass** der Schritt des Versiegelns und des Schneidens unabhängig für jede Backe (6) durchgeführt wird, wobei sich die Backen (6) unabhängig voneinander bewegen, mindestens um sich von der Öffnungsposition (P1) in die Verschlussposition (P2) und umgekehrt zu ändern, und dadurch, dass es einen Schritt des Sammelns nach jedem Schritt des Versiegelns und des Schneidens einer Backe (6) und bevor der folgende Schritt des Versiegelns und des Schneidens der folgenden Backe (6) beginnt, umfasst, in dem die Folie von der zweiten Walze (51), die das Produkt (P) verpackt, gesammelt wird, wobei die Folie als Ergebnis eines Spannelements (7) straff in Richtung der Walze (51) ist, wobei die Backen (6) die Schritte des Versiegelns und des Schneidens sequenziell durchführen, wobei der Schritt des Versiegelns und des Schneidens einer Backe (6) beginnt, nachdem die Backe (6), die sich zuvor bewegt hat, den Schritt des Versiegelns und des Schneidens beendet hat, und nach dem folgenden Schritt des Sammelns.

11. Verfahren nach Anspruch 10, wobei die Sequenz der Backen (6) ununterbrochen ist, wobei der Schritt des Versiegelns und des Schneidens einer Backe (6) durchgeführt wird, wenn eine Backe (6), die ihr in der Vorwärtsbewegungsrichtung (C) benachbart ist, den Schritt des Versiegelns und des Schneidens beendet hat, und nach dem entsprechenden Schritt des Sammelns, außer wenn der Schritt des Versiegelns und des Schneidens der Backe (6) die in der Position angeordnet ist, die sich am weitesten hinten in der Vorwärtsbewegungsrichtung (X) befindet, durchgeführt wird, wobei in diesem Fall nach dem entsprechenden Schritt des Sammelns, der folgende Schritt des Versiegelns und des Schneidens der Backe (6) entspricht, die in der Position angeordnet ist, die sich am weitesten vorne in der Vorwärtsbewegungsrichtung (X) befindet.

12. Verfahren nach Anspruch 10 oder 11, umfassend: einen Schritt des Trennens, in dem eine Erhöhung des Abstands zwischen einem verpackten Produkt (P) und den Gegenbacken (1), zwischen denen es angeordnet ist, verursacht wird, so dass der Teil der Verpackung des Produkts (P), der auf der Gegenbacke (1) angeordnet ist, von der Gegenbacke (1) gelöst wird.

13. Verfahren nach Anspruch 12, wobei der Abstand zwischen dem verpackten Produkt (P) und den Gegenbacken (1), zwischen denen es angeordnet ist, durch die Trennung der Gegenbacken (1) voneinander erhöht wird, und die Trennung erfolgt, indem verursacht wird, dass sich beide Gegenbacken (1) in entgegengesetzte Richtungen drehen.

14. Verfahren nach Anspruch 13, wobei der Abstand zwischen dem verpackten Produkt (P) und den Gegenbacken (1), zwischen denen es angeordnet ist, erhöht wird, indem ein Schub nach oben auf das Produkt (P) verursacht wird, wobei das Produkt (P) getrennt wird.

## Revendications

1. Machine d'emballage de produit comprenant des moyens de transport amenant les produits (P) à se déplacer dans une direction de déplacement vers l'avant (X), une pluralité de contre-mâchoires transversales (1) qui sont réparties de manière homogène dans la direction de déplacement vers l'avant (X) et séparées les unes des autres par une distance de séparation (D) spécifique appropriée pour loger un produit (P), un dérouleur inférieur (4) pour une première bobine (41) de film, amenant le film de la première bobine (41) à être agencé sur les contre-mâchoires (1), un dérouleur supérieur (5) pour une seconde bobine (51) de film, amenant le film de la seconde bobine (51) à être agencé sur les produits (P) à emballer, une pluralité de mâchoires transversales (6) qui sont réparties de manière homogène dans la direction de déplacement vers l'avant (X) séparées les unes des autres par la même distance de séparation (D) qui existe entre les contre-mâchoires (1), les mâchoires (6) se déplaçant dans une direction de fermeture (Y) perpendiculaire à la direction de déplacement vers l'avant (X) à partir d'une position d'ouverture (P1) jusqu'à une position de fermeture (P2) contre les contre-mâchoires (1) pour sceller les films entre eux et les couper, et chaque mâchoire (6) étant appropriée pour former au moins un joint entre deux films et pour couper les films scellés dans une zone intermédiaire du joint, et un dispositif de positionnement (10) déplaçant toutes les mâchoires (6) de manière solidaire dans la direction de déplacement vers l'avant (X), **caractérisée en ce que** la machine (100) comprend en outre un actionneur de mâchoire (9) pour chaque mâchoire (6), amenant la mâchoire (6) correspondante à se déplacer la direction de fermeture (Y), de sorte que les mâchoires (6) sont appropriées pour se déplacer simultanément dans la direction de déplacement vers l'avant (X) et pour se déplacer indépendamment les unes des autres dans la direction de fermeture (Y) ; un dispositif de tension (7) ou balancier approprié pour collecter une partie du film emballant le produit (P) lorsqu'une mâchoire (6) quitte la position de fermeture (P2), le dispositif de tension (7) étant associé au dérouleur supérieur (5) et étant approprié pour agir sur le film de la seconde bobine (51) agencé dans ledit dérouleur supérieur (5) ; et des moyens de commande pour amener les mâchoires (6) à passer d'une position d'ouverture (P1) à une position de fermeture (P2) et vice-versa d'une manière séquentielle, en outre lesdits moyens de commande amenant une mâchoire (6) à passer dans sa position de fermeture (P2) lorsque la mâchoire (6) précédente se déplaçant avant elle dans sa position de fermeture (P2) correspondante est revenue dans sa position d'ouverture (P1) et une fois que le dispositif de tension (7) a collecté une partie du film emballant le produit (P) correspondant.

2. Machine d'emballage de produit selon la revendication 1, dans laquelle les mâchoires (6) sont fixées au dispositif de positionnement (10) avec une liberté de mouvement dans la direction de fermeture (Y), lesdites mâchoires (Y) étant déplacées conjointement avec ledit dispositif de positionnement (10) dans la direction de déplacement vers l'avant (X).

3. Machine d'emballage de produit selon les revendications 1 ou 2, dans laquelle les actionneurs de mâchoire (9) sont fixés au dispositif de positionnement (10), lesdits actionneurs de mâchoire (9) étant déplacés conjointement avec ledit dispositif de positionnement (10) dans la direction de déplacement vers l'avant (X).

4. Machine d'emballage de produit selon l'une quelconque des revendications 1 à 3, comprenant des moyens de séparation pour détacher le film des contre-mâchoires (1) une fois que la mâchoire (6) a arrêté d'agir contre ladite contre-mâchoire (1), amenant la distance entre le produit emballé (P) et les contre-mâchoires (1) entre lesquelles il est agencé, à augmenter.

5. Machine d'emballage de produit selon la revendication 4, dans laquelle pour augmenter la distance entre le produit emballé (P) et les contre-mâchoires (1) entre lesquelles il est agencé, les moyens de séparation amènent les moyens de transport à présenter un défaut d'alignement à un point où les produits sont déjà emballés.

6. Machine d'emballage de produit selon la revendication 5, dans laquelle les moyens de séparation comprennent au moins trois rouleaux (91, 92, 93) répartis dans la direction de déplacement vers l'avant (X), le premier rouleau (91) et le dernier rouleau (93) étant alignés entre eux et maintenant les moyens de transport alignés, et le rouleau intermédiaire (92) étant agencé de sorte qu'il présente un défaut d'alignement par rapport aux deux autres rouleaux (91, 92).

7. Machine d'emballage de produit selon la revendication 6, dans laquelle le rouleau intermédiaire (92) est agencé à une hauteur inférieure à la hauteur à laquelle les deux autres rouleaux (91, 93) sont agencés, les moyens de transport passant sous le premier rouleau (91) et le dernier rouleau (93) et sur le rouleau intermédiaire (92), le rouleau intermédiaire (92) amenant les moyens de transport à présenter un défaut d'alignement lorsque lesdits moyens passent sur ce dernier.

8. Machine d'emballage de produit selon la revendication 7, dans laquelle le rouleau intermédiaire (92) est dimensionné de sorte que deux contre-mâchoires (1) contiguës sont inclinées dans des directions opposées lorsqu'elles sont positionnées sur ledit rouleau intermédiaire (92), suivant une trajectoire incurvée par rapport à un axe de rotation du rouleau intermédiaire (92) lorsque le produit agencé entre deux contre-mâchoires (1) est agencé de sorte qu'il est centré sur le rouleau intermédiaire (92).

9. Machine d'emballage de produit selon la revendication 4, comprenant un actionneur agissant sur le produit (P) pour le séparer des contre-mâchoires (1).

10. Procédé de fonctionnement pour une machine d'emballage de produit comprenant un dérouleur inférieur (4) pour une première bobine (41) de film, amenant le film de la première bobine (41) à être agencé sur les contre-mâchoires (1), un dérouleur supérieur (5) pour une seconde bobine (51) de film, amenant le film de la seconde bobine (51) à être agencé sur les produits (P) à emballer, une pluralité de contre-mâchoires transversales (1) qui sont réparties de manière homogène dans une direction de déplacement vers l'avant (X) et sont séparées les unes des autres par une distance de séparation spécifique (D) et une pluralité de mâchoires transversales (6) qui sont réparties de manière homogène dans la direction de déplacement vers l'avant (X), le procédé comprenant une étape de scellement et de coupe dans laquelle les mâchoires (6) sont déplacées dans une direction de fermeture (Y) perpendiculaire à la direction de déplacement vers l'avant (X) d'une position d'ouverture (P1) à une position de fermeture (P2) contre les contre-mâchoires (1) pour sceller les films entre eux et les couper et lesdites mâchoires (6) reviennent ensuite dans leur position d'ouverture (P1) une fois que le scellement et la coupe ont été réalisés, les mâchoires (6) étant déplacées dans la direction de déplacement vers l'avant (X) que suivent les produits (P) pendant leur étape de scellement et de coupe et qui reviennent dans leur position initiale dans la direction de déplacement vers l'avant (X) une fois que leur étape de scellement et de coupe s'est terminée, ladite étape de scellement et de coupe et ledit déplacement dans la direction (X) étant répétés de manière cyclique, **caractérisé en ce que** ladite étape de scellement et de coupe est réalisée indépendamment pour chaque mâchoire (6), les mâchoires (6) se déplaçant indépendamment les unes des autres au moins pour passer de la position d'ouverture (P1) à la position de fermeture (P2) et vice-versa, et **en ce qu'**il comprend une étape de collecte après chaque étape de scellement et de coupe d'une mâchoire (6) et avant que la prochaine étape de scellement et de coupe de la mâchoire (6) suivante ne démarre, dans laquelle le film de la seconde bobine (51) emballant le produit (P) est collecté, ledit film étant tendu dans la direction de ladite bobine (51) à cause d'un dispositif de tension (7), les mâchoires (6) réalisant les étapes de scellement et de coupe de manière séquentielle, l'étape de scellement et de coupe d'une mâchoire (6) commençant une fois que la mâchoire (6) qui a été préalablement déplacée, a terminé son étape de scellement et de coupe, et après l'étape de collecte suivante.

11. Procédé selon la revendication 10, dans lequel la séquence des mâchoires (6) est continue, l'étape de scellement et de coupe d'une mâchoire (6) étant réalisée lorsqu'une mâchoire (6) adjacente à cette dernière dans la direction de déplacement vers l'avant (X) a terminé l'étape de scellement et de coupe et après l'étape de collecte correspondante, excepté lorsque l'étape de scellement et de coupe de la mâchoire (6) agencée dans la position qui est la plus éloignée derrière, dans la direction de déplacement vers l'avant (X) est réalisée, auquel cas, après l'étape de collecte correspondante, l'étape de scellement et de coupe suivante correspond à la mâchoire (6) agencée dans la position la plus éloignée devant, dans la direction de déplacement vers l'avant (X).

12. Procédé selon les revendications 10 ou 11, comprenant une étape de séparation dans laquelle une augmentation est provoquée dans la distance entre un produit (P) emballé et les contre-mâchoires (1) entre lesquelles il est agencé, de sorte que la partie de l'emballage du produit (P) agencé sur une contre-mâchoire (1) est détachée de ladite contre-mâchoire (1).

13. Procédé selon la revendication 12, dans lequel la distance entre un produit (P) emballé et les contre-mâchoires (1) entre lesquelles il est agencé, est augmentée en séparant lesdites contre-mâchoires (1) les unes des autres, et ladite séparation est réalisée en amenant les deux contre-mâchoires (1) à tourner dans des directions opposées.

14. Procédé selon la revendication 13, dans lequel la distance entre un produit (P) emballé et les contre-mâchoires (1) entre lesquelles il est agencé, est augmentée en provoquant une poussée vers le haut sur le produit (P), le produit (P) étant séparé.
